(19) Europäisches Patentamt
European Patent Office
Office européen des brevets

(11) **EP 1 523 008 A2**

(12) **EUROPEAN PATENT APPLICATION**

(43) Date of publication:
**13.04.2005 Bulletin 2005/15**

(51) Int Cl.[7]: **G11B 23/03**, G11B 33/04

(21) Application number: **04023909.7**

(22) Date of filing: **07.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **07.10.2003 JP 2003348039**

(71) Applicant: **TDK Corporation**
**Chuo-ku, Tokyo 103-8272 (JP)**

(72) Inventors:
• **Yamada, Takashi**
  **Tokyo 103-8272 (JP)**
• **Komaki, Tsuyoshi**
  **Tokyo 103-8272 (JP)**

(74) Representative: **HOFFMANN - EITLE**
**Patent- und Rechtsanwälte**
**Arabellastrasse 4**
**81925 München (DE)**

(54) **Disc cartridge**

(57)     Disclosed is a disc cartridge capable of reducing a deformation of a disc-shaped recording medium by restraining a thermal influence exerted from a recording/reproducing apparatus when loaded into this apparatus. The disc cartridge includes a shell unit for accommodating an optical disc rotatably and in a shielded state, and a clamp member disposed in the vicinity of a central hole of the disc-shaped recording medium so that when the disc cartridge is loaded into a recording/reproducing apparatus and a clamp shaft of the apparatus is fitted into the central hole, the clamp member contacts with the clamp shaft and is thus clamped, wherein the clamp member is made of a plate material exhibiting a larger temperature diffusion coefficient than those of a substrate material of the optical disc and of a material of the clamp shaft, and a temperature diffusion coefficient of the plate material is equal to or larger than $1 \times 10^{-4}$ $m^2/s$.

## FIG. 5

## Description

BACKGROUND OF THE INVENTION

Field of the Invention

The present invention relates to a disc cartridge that rotatably accommodates a disc-shaped recording medium and includes a clamp member for clamping the disc-shaped recording medium when loaded into a recording/reproducing apparatus.

Description of the Prior Art

A Blu-ray disc classified as an optical disc having a higher recording density than that of a DVD has recently been utilized by way of an optical recording medium. In the Blu-ray disc, however, there is specified a range of a change in warp caused with a passage of time as a concomitant of an abrupt change in temperature and so on. Further, the Blu-ray disc is used in such a way that the disc cartridge accommodates the Blue-ray disc (refer to Japanese Patent Application Laid-Open Publication No.2003-109352). When the disc cartridge is loaded into a recording/reproducing apparatus, the optical disc is clamped by a clamp shaft of the recording/reproducing apparatus, however, a central portion of the optical disc, which abuts on the clamp shaft, has a local change in temperature as the temperature abruptly changes, resulting in a problem that the optical disc is largely warped.

The following is a reason why the optical disc is warped as described above. Normally, an internal temperature of the recording/reproducing apparatus is as high as approximately 50°C through 60°C, and therefore the central portion of the optical disc immediately reaches this temperature. By contrast, an optical disc portion including a recording area receives a heat transfer from an atmospheric air, and hence a rise in temperature is comparatively moderate. As a result, there occurs a difference in temperature (an optical disc inner/outer periphery temperature difference) between the central portion and the optical disc portion including the recording area, wherein the central portion is heated to cause an expansion and tries to stretch out, while the optical disc portion is by contrast in a non-stretched state. The warp is caused for relaxing (absorbing) the difference in expansion amount between the inner peripheral portion and the outer peripheral portion. Consequently, there occurs a possibility that warp standards for the optical are not met.

SUMMARY OF THE INVENTION

It is an object of the present invention to provide a disc cartridge capable of reducing a deformation of a disc-shaped recording medium by restraining a thermal influence exerted from a recording/reproducing apparatus when loaded into this apparatus.

To accomplish the above object, the present inventors acquired the following knowledge as a result of having performed concentrated studies and examinations, and reached the present invention.

When an ambient temperature abruptly changes, in the optical disc housed in the cartridge, a local thermal expansion is caused at only a clamp portion in the vicinity of the central hole of the optical disc, with the result that the warp occurs. For restraining this warp, the heat applied to the clamp portion of the optical disc is made to escape by use of the clamp member.

An amount of heat applied to the clamp portion of the optical disc is proportional to the thermal capacity of the clamp shaft, defined as a heat emission source, of the recording/reproducing apparatus. The heat from this clamp shaft is transferred to the optical disc, whereby the optical disc rises in its temperature and thermally expands, resulting in an occurrence of a deformation such as the warp and so on. When the temperature of the optical disc rises, there is caused a difference in temperature between the optical disc and the clamp member, and hence the heat is transferred to the clamp member from the optical disc this time. Namely, it follows that the heat from the clamp shaft is absorbed by the clamp member, and, as a result, the rise in temperature of the clamp portion of the optical disc is restrained, thereby restraining the warp.

The clamp member, especially when having a large thermal capacity, is capable of absorbing much of the heat applied to the optical disc to a degree corresponding to its thermal capacity, so that the increase in temperature of the clamp portion can be restrained for comparatively a long period of time.

Further, if the temperature diffusion coefficient of the clamp member is large, the amount of heat transferred to the clamp member from the optical disc per unit time becomes large, and it is therefore possible to restrain the change in temperature of the optical disc per unit time and also restrain the change in warp.

With respect to the thermal capacity and the temperature diffusion coefficient described above, if only one of these elements is excellent, for example, in a case where the temperature diffusion coefficient is small though the thermal capacity of the clamp member is large, a heat supply to the optical disc from the clamp shaft per unit time becomes larger than a heat supply to the clamp member from the optical disc. As a consequence, it follows that the temperature of the optical disc rises to a greater degree. Accordingly, the clamp member exhibiting the large thermal capacity and the large temperature diffusion coefficient is preferable to the restraint of the warp.

It proved from what has been explained above that (1) the clamp member is made of a plate material exhibiting the larger temperature diffusion coefficient than those of a substrate material of the disc-shaped recording medium and of a material of the clamp shaft, and this construction is effective in restraining the change in warp of the optical disc. It also proved from a result of examining the temperature diffusion coefficients of the preferable plate materials that (2) an effective temperature diffusion coefficient (= a temperature transfer speed) of the plate material is equal to or larger than $1 \times 10^{-4}$ $m^2$/s.

(3) Among the plate materials that meet the conditions (1) and (2), a material capable of exhibiting a function as the clamp member is employed. For instance, the clamp member, if large of its volume, can not be housed in the cartridge and is preferably small to the greatest possible degree. Further, if the clamp member itself is heavy, a force of chucking changes with the result that the optical disc gets deformed, and therefore the clamp member is made as light as possible by use of a material such as aluminum and so forth.

The materials concretely usable as the plate materials of the clamp member are exemplified by materials having the high temperature diffusion coefficient such as aluminum, an aluminum alloy, copper and a copper alloy. Further, the clamp member is coated or filled with, e.g., a silicon grease that is a material acquired by adding a non-organic filler to an organic material having fluidity or semi-fluidity and an adhesive property, thus interposing the silicon grease therebetween. With this contrivance, the clamp member is employed in a way that tightly fits to the clamp member a material unable to be worked as the clamp member such as a PGS graphite sheet exhibiting comparatively a large temperature diffusion coefficient.

The materials given above are not invariably magnetic materials. Therefore, in this case, the magnetic material such as a mild steel, a stainless steel, etc. is incorporated into part of the clamp member, and the above-exemplified material having the large temperature diffusion coefficient is employed for the portion where the clamp member is brought into contact with the optical disc.

Namely, a disc cartridge according to the present embodiment includes a shell unit for accommodating a disc-shaped recording medium rotatably and in a shielded state, and a clamp member disposed in the vicinity of a central hole of the disc-shaped recording medium so that when the disc cartridge is loaded into a recording/reproducing apparatus and a clamp shaft of the apparatus is fitted into the central hole, the clamp member contacts with the clamp shaft and is thus clamped, wherein the clamp member is made of a plate material exhibiting a larger temperature diffusion coefficient than those of a substrate material of the disc-shaped recording medium and of a material of the clamp shaft, and a temperature diffusion coefficient of the plate material is equal to or larger than $1 \times 10^{-4}$ $m^2$/s.

According to this disc cartridge, when the disc cartridge is loaded into the recording/reproducing apparatus and the clamp shaft is fitted into the central hole, the clamp member contacts with the clamp shaft and is thus clamped, and then, since the clamp member is made of the material exhibiting the larger temperature diffusion coefficient than those of the substrate material of the disc-shaped recording medium and of the material of the clamp shaft and the temperature diffusion coefficient of the clamp member is equal to or larger than $1 \times 10^{-4}$ $m^2$/s, the heat from the clamp shaft is easier to transfer to the clamp member than to the disc-shaped recording medium, and the heat transferred to the disc-shaped recording medium from the central hole is reduced. It is therefore possible to restrain the thermal influence on the disc-shaped recording medium from the recording/reproducing apparatus and to reduce the deformation such as the warp, etc. of the disc-shaped recording medium.

The temperature diffusion coefficient given above connotes a temperature transfer speed and can be defined by the following formula (1).

$$\text{Temperature Diffusion Coefficient = Thermal}$$

$$\text{Conductivity / (Specific Gravity X Specific Heat)} \tag{1}$$

In the disc cartridge described above, it is preferable that a volume of the clamp member be within a range of 0.5 $cm^3$ through 2 $cm^3$, and a thermal capacity of the plate material be larger than a thermal capacity of an area, corresponding to the clamp member, of the substrate material. With this contrivance, the clamp member can be housed in the cartridge, and besides the thermal capacity of the plate material of the clamp member is set larger than that of the substrate material. This contrivance also enables the clamp member to absorb much of the heat applied to the disc-shaped recording medium, whereby a temperature of the clamp portion around the central hole of the disc-shaped recording medium can be restrained from rising for comparatively a long period of time.

It is preferable that the plate material described above be any one of aluminum, an aluminum alloy, copper and a copper alloy.

Another disc cartridge according to the present embodiment includes a shell unit for accommodating a disc-shaped recording medium rotatably and in a shielded state, and a clamp member disposed in the vicinity of a central hole of the disc-shaped recording medium so that when the disc cartridge is loaded into a recording/reproducing apparatus and a clamp shaft of the apparatus is fitted into the central hole, the clamp member contacts with the clamp shaft and is thus clamped, wherein a substance exhibiting a larger temperature diffusion coefficient than that of the clamp member is added to the clamp member.

According to this disc cartridge, when the disc cartridge is loaded into the recording/reproducing apparatus and the clamp shaft is fitted into the central hole, the clamp member contacts with the clamp shaft and is thus clamped, and then, since the substance exhibiting the larger temperature diffusion coefficient than that of the clamp member is added to the clamp member, the heat from the clamp shaft is easier to transfer to the clamp member than to the disc-shaped recording medium, and the heat transferred to the disc-shaped recording medium from the central hole is reduced. It is therefore possible to restrain the thermal influence on the disc-shaped recording medium from the recording/reproducing apparatus and to reduce the deformation such as the warp, etc. of the disc-shaped recording medium.

In the disc cartridge described above, it is preferable that the substance exhibiting the larger temperature diffusion coefficient is disposed tightly in the clamp member by filling or coating with a substance having fluidity or semi-fluidity.

In the disc cartridge described above, when the clamp member is made of a non-magnetic material, a magnetic material is added to part of the clamp member, whereby the clamp member can be magnetically attracted to the clamp shaft of the apparatus.

According to this disc cartridge in the present embodiment, the heat from the clamp shaft, when installed in the recording/reproducing apparatus, is easy to transfer to the clamp member, and the heat transferred to the disc-shaped recording medium from the central hole is reduced. It is therefore possible to restrain the thermal influence on the disc-shaped recording medium from the recording/reproducing apparatus and to reduce the deformation such as the warp, etc. of the disc-shaped recording medium.

BRIEF DESCRIPTION OF THE DRAWINGS

FIG. 1 is a perspective view showing a disc cartridge as viewed from the side of an upper shell in a best mode for carrying out the present invention;

FIG. 2 is an exploded perspective view of the disc cartridge in FIG. 1;

FIG. 3 is a perspective view showing the disc cartridge in FIG. 1 in a shutter-closed state as viewed from the side of a lower shell;

FIG. 4 is an exploded perspective view of the disc cartridge in FIG. 3;

FIG. 5 is a view showing an inner surface of the upper shell in FIG. 4;

FIG. 6 is a view showing an inner surface of the lower shell in FIG. 2;

FIG. 7 is a perspective view showing the upper shell in FIG. 4, a clamp member and a clamp presser member;

FIG. 8 is a sectional view of the disc cartridge as viewed by cutting it in a direction along the line VIII-VIII in FIG. 1;

FIG. 9 is a sectional view of the disc cartridge as viewed by cutting it in a direction along the line IX-IX in FIG. 3;

FIG. 10 is a principal sectional view showing a pre-clamped state of the clamp member of the cartridge in FIGS. 1 and 3 which is loaded into the recording/reproducing apparatus;

FIG. 11 is a principal sectional view showing a state where the clamp member of the cartridge in FIGS. 1 and 3 which is loaded into the recording/reproducing apparatus is clamped down to a clamp shaft on the side of the apparatus;

FIG. 12 is a plan view showing a state where an aperture portion of an inner shell incorporated into the lower shell in FIG. 2 is aligned with an aperture portion of the lower shell;

FIG. 13 is a plan view showing a state where the aperture portion of the inner shell incorporated into the lower shell in FIG. 2 is deviated from the aperture portion of the lower shell;

FIG. 14 is a perspective view of the shutter in FIG. 2 as viewed from the upper face;

FIG. 15 is a perspective view of the shutter in FIG. 4 as viewed from the lower face;

FIG. 16 is a perspective view showing a state where shutter members in FIGS. 14 and 15 are attached to the inner shell in FIG. 4, and the aperture portions are opened;

FIG. 17 is a perspective view showing a state where the shutter members in FIGS. 14 and 15 are attached to the inner shell in FIG. 4, and the aperture portions are closed.

FIG. 18 is a plan view showing a state where the shutter member in FIG. 17 completely closes the aperture portion;

FIG. 19 is a plan view showing a state where the shutter member in FIG. 16 completely uncloses the aperture portion;

FIG. 20 is a principal sectional view, similar to FIG. 10, showing a modified example of the clamp member in FIG. 10 and also showing a state before the clamp member of the disc cartridge in FIGS. 1 and 3 is clamped; and

FIG. 21 is a principal sectional view, similar to FIG. 20, showing another modified example of the clamp member in FIG. 10.

DETAILED DESCRIPTION OF THE PREFERRED EMBODIMENTS

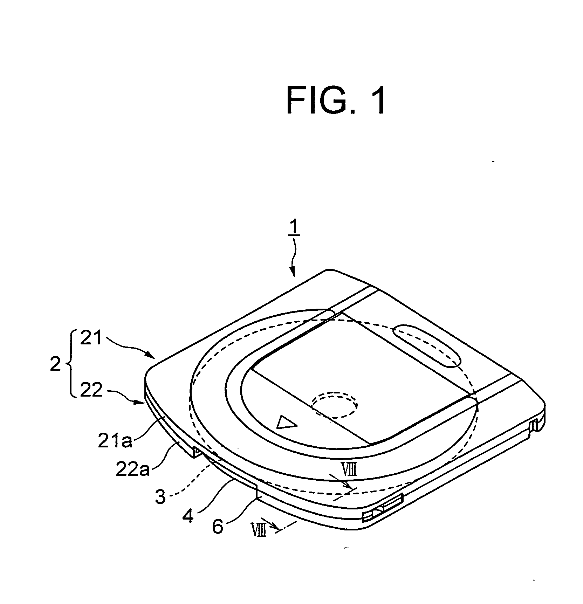

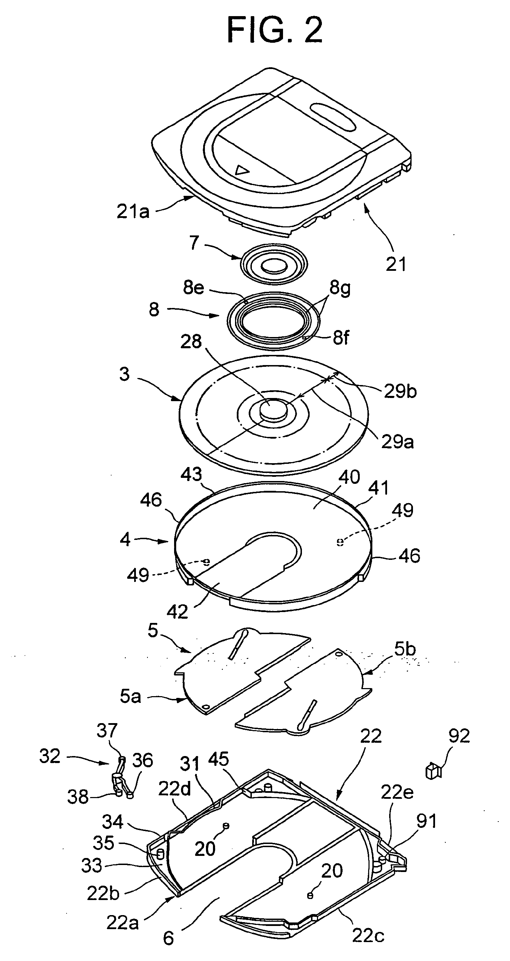

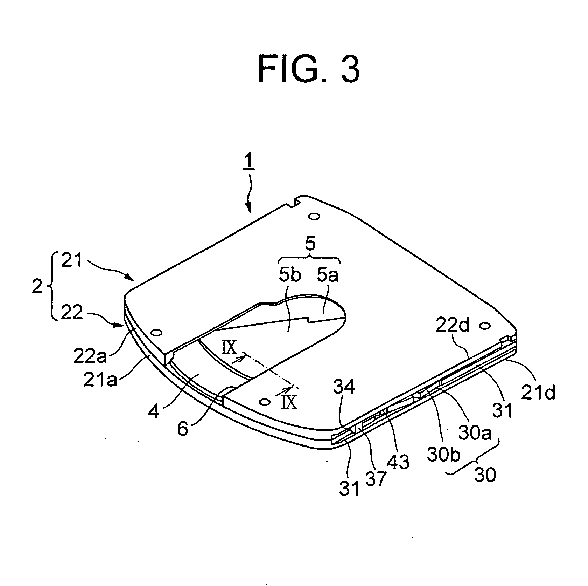

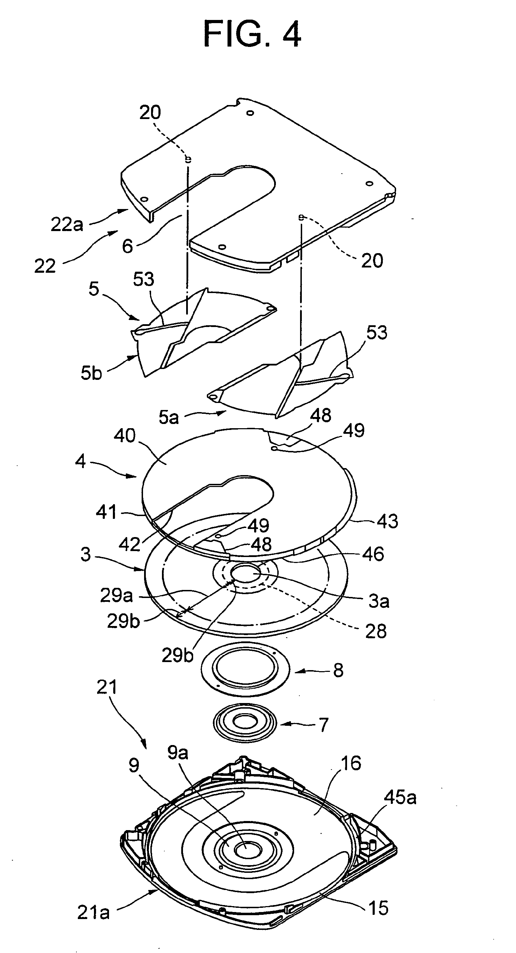

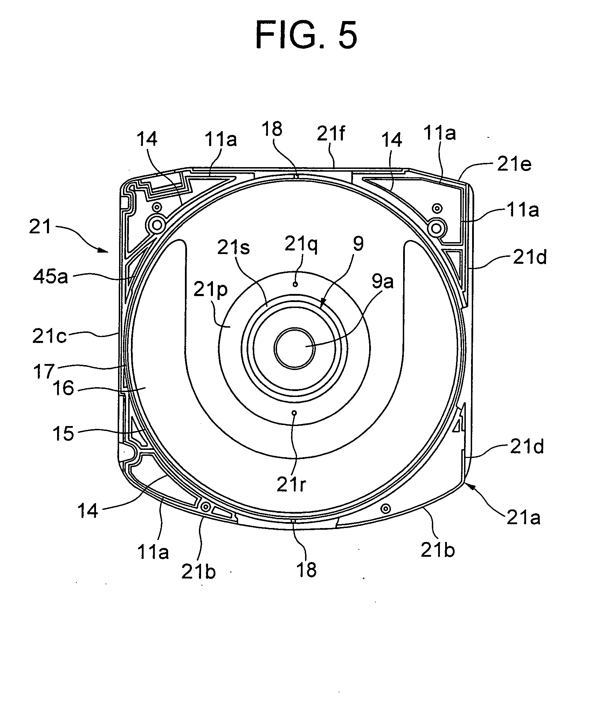

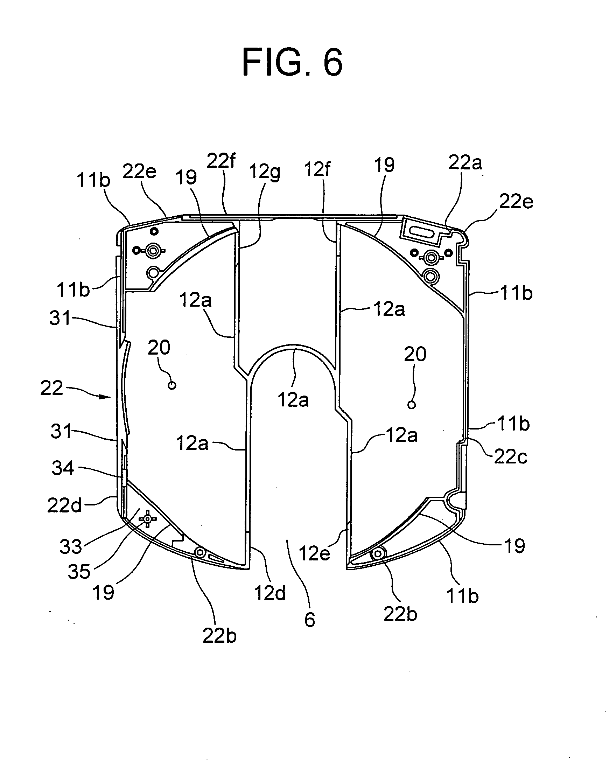

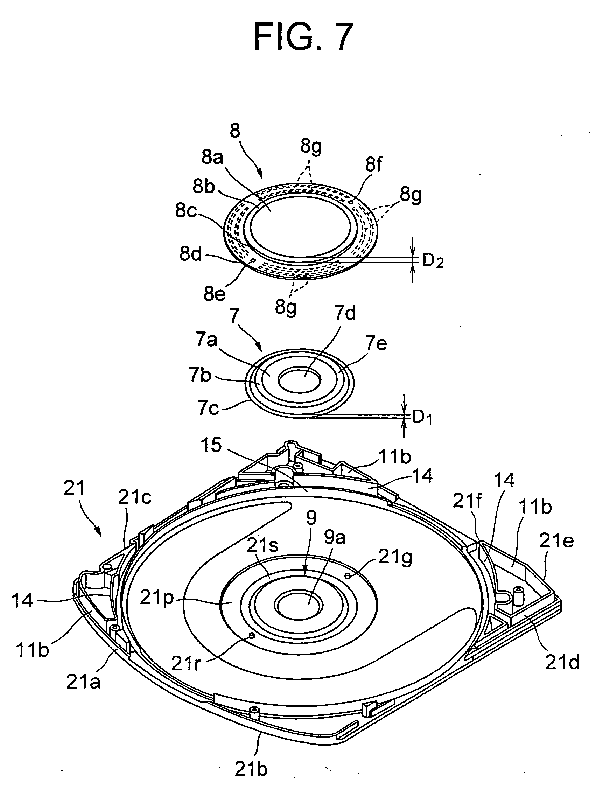

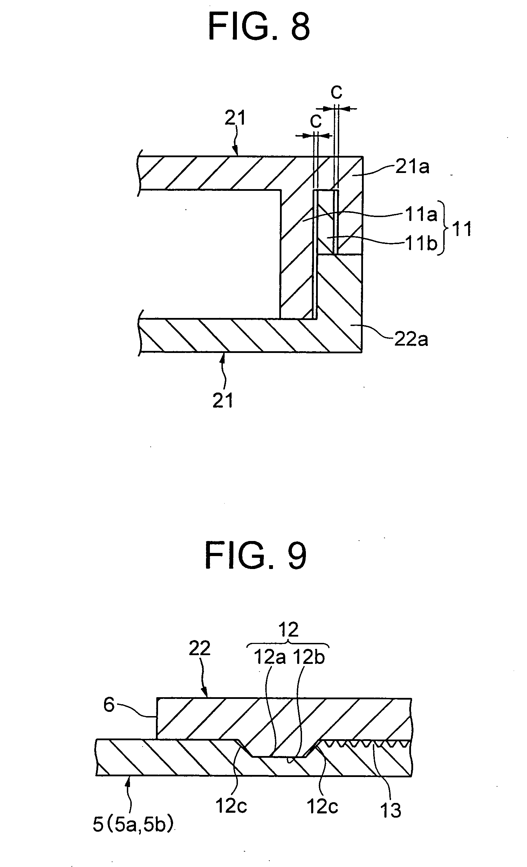

A disc cartridge in a best mode for carrying out the present invention will hereinafter be described with reference to the drawings. FIG. 1 is a perspective view showing the disc cartridge as viewed from the side of an upper shell. FIG. 2 is an exploded perspective view of FIG. 1. FIG. 3 is a perspective view showing the disc cartridge in a shutter-closed state as viewed from the side of a lower shell. FIG. 4 is an exploded perspective view of FIG. 3. FIG. 5 is a view showing an inner surface of the upper shell in FIG. 4. FIG. 6 is a view showing an inner surface of the lower shell in FIG. 2. FIG. 7 is a perspective view showing the upper shell, a clamp member and a clamp presser member. FIG. 8 is a sectional view of the disc cartridge as viewed by cutting it in a direction along the line VIII-VIII in FIG. 1. FIG. 9 is a sectional view of the disc cartridge as viewed by cutting it in a direction along the line IX-IX in FIG. 3.

As shown in FIGS. 1 to 7, a disc cartridge 1 includes a cartridge box body 2, an inner shell 4 and a shutter unit 5. The cartridge box body 2 accommodates an optical disc 3 in a rotatable manner, and has an upper shell 2 and a lower shell 22 formed with a first aperture portion 6 for recording and reproducing. The cartridge box body 2 is constructed by superimposing a peripheral wall 21a of the upper shell 21 on a peripheral wall 22a of the lower shell 22, and accommodates the optical disc 3, the inner shell 4 and the shutter unit 5. The inner shell 4 has a second aperture portion 42 taking substantially the same shape as the first aperture portion 6, and the shutter unit 5 is connected to the inner shell 4 and opens and closes the first aperture portion 6.

In the cartridge box body 2, when rotating the inner shell 4 in one direction, the shutter unit 5 moves to a first position in which to close the first aperture portion 6 formed in the cartridge box body 2. When rotating the inner shell 4 in a reversed direction, the shutter unit 5 moves to a second position in which to open the first aperture portion 6 formed in the cartridge box body 2.

A clamp member 7 is so secured by the clamp presser member 8 to the inner surface of the upper shell 21 as to be movable in vertical directions. When the disc cartridge 1 is loaded into a recording/reproducing apparatus, the clamp member 7 is magnetically attracted toward a turntable of the recording/reproducing apparatus. The clamp member 7 pinches the optical disc 3 between the turntable of the recording/reproducing apparatus and the clamp member 7 itself, and then clamps the optical disc 3 down.

As shown in FIGS. 1, 3, 4, 5 and 7, the upper shell 21 is structured of a member taking a rectangular shape with a front sided portion formed in a circular arc or substantially a square shape. An outer peripheral edge portion of the upper shell 21 is provided with the peripheral wall 21a, and a first recessed portion 21p for fitting the clamp member 7 is formed in a central portion of the inner surface of the upper shell 21. The first recessed portion 21p includes first and second alignment (positioning) pins 21q, 21r inserted into first and second alignment pin insertion holes 8e, 8f formed in a fixing portion 8d of the clamp presser member 8. The first and second alignment pins 21q, 21r are formed by resin molding integrally with the upper shell 21, corresponding to the first and second alignment pin insertion holes 8e, 8f of the clamp presser member 8.

Further, a second recessed portion 21s, into which a collar portion 7c of the clamp member 7 is inserted, is formed along an inner periphery of the first recessed portion 21p in the inner surface of the upper shell 21. A clamp member movement regulating portion 9, taking substantially a cone trapezoidal shape, for regulating a movement amount of the clamp member 7, is protruded at a central portion of the second recessed portion 21s. A central portion of the clamp member movement regulating portion 9 is formed with a recessed portion 9a into which an upper face side of the recessed portion 7d of the clamp member 7 is inserted. Further, the peripheral wall 21a of the upper shell 21 has a front edge portion 21b, a pair of side edge portions 21c, 21d and a rear edge portion 21e. A central portion of the rear edge portion 21e is formed with an alignment recessed portion 21f for alignment with the lower shell 22.

Provided, as shown in FIGS. 5 and 8, inwardly of the peripheral wall 21a are first dust-proof walls 11a at a corner portion between the front side edge portion 21b and one side edge portion 21c, at a corner portion between one side edge portion 21c and the rear side edge portion 21e, and at a corner portion between the rear side edge portion 21e and the other side edge portion 21d. Spaces where second dust-proof walls 11b of the lower shell 22 in FIG. 8 are positioned, are formed between the first dust-proof walls 11a and the peripheral wall 21a.

As shown in FIGS. 5 and 7, at the respective corner portions along the inner surface of the upper shell 21, circular-arc ribs 14 having substantially the same height of those of the first dust-proof walls 11a are each formed in a circular-arc shape extending from one side end of the first dust-proof wall 11a to the other side end thereof inwardly of the first dust-proof walls 11a. A ring-shaped rib 15 is provided inwardly of the circular-arc ribs 14. An internal area defined by the ring-shaped rib 15 within the inner shell 4 configures an accommodating portion for accommodating the optical disc 3.

A ring-shaped recessed portion 17, into which a front side end of the ring portion of the inner shell 4 is fitted, is provided outwardly of the ring-shaped rib 15. Lift-up protruded portions 18 for moving the inner shell 4 in such a direction as to separate away from the lower shell 22, are provided in front-and-rear symmetric positions (which are phase-shifted 180 degrees) on a bottom face of the ring-shaped recessed portion 17. The protruded portions 18 move the inner shell 4 in such a direction as to separate away from the upper shell 21 as inner-shell-sided protruded portions 46 provided on a front side end face of the ring portion 41 of the inner shell run thereon.

As shown in FIGS. 1, 2, 3 and 6, the lower shell 22 is, as in the case of the upper shell 21, structured of a member taking a rectangular shape with a front sided portion formed in a circular arc or substantially a square shape. An outer peripheral edge portion of the lower shell 22 is provided with a peripheral wall 22a. The peripheral wall 22a is constructed of a front edge portion 22b, a pair of side edge portions 22c, 22d and a rear edge portion 22e. A central portion of the rear edge portion 22e is provided with an alignment protruded portion 22f for alignment with the upper shell 21.

Provided, as shown in FIG. 6, inwardly of the peripheral wall 22a of the lower shell 22 are second dust-proof walls 11b at a corner portion between the front side edge portion 22b and one side edge portion 22c, at a corner portion between one side edge portion 22c and the rear side edge portion 22e, and at a corner portion between the rear side edge portion 22e and the other side edge portion 22d. The second dust-proof wall 11b is, as shown in FIG. 8, thinner than the peripheral wall 22a of the lower shell 22 and is so formed integrally with the peripheral wall 22a as to protrude from a front side end of the peripheral wall 22a.

As shown in FIG. 6, circular-arc ribs 19 having substantially the same height of those of the first dust-proof walls 11a are each formed in a circular-arc shape extending from one side end of the second dust-proof wall 11b to the other side end thereof inwardly of the second dust-proof walls 11b. An internal area defined by the ring-shaped ribs 19 of the lower shell 22 configures an accommodating portion for accommodating substantially a half of the inner shell 4 in wall-thicknesswise direction and the pair of shutter unit 5.

The upper shell 21 is superimposed on the lower shell 22 so that the peripheral walls 21a, 22a thereof butt on each other in a state where the alignment protruded portion 22f is fitted in the alignment recessed portion 21f. Owing to the superimposition of the upper and lower shells 21 and 22, as shown in FIG. 8, the second dust-proof wall 11b protruding from the peripheral wall 22a of the lower shell 22 enters between the first dust-proof wall 11a of the upper shell 21 and the peripheral wall 21a. Thus, the first dust-proof wall 11a of the upper shell 21 cooperates with the second dust-proof wall 11b and the peripheral wall 22a of the lower shell 22 to build up a first dust infiltration blocking portion 11.

In the first dust infiltration blocking portion 11, the first dust-proof wall 11a of the upper shell 21 takes substantially a double-wall structure, and the second dust-proof wall 11b of the lower shell 22 is inserted along the first dust-proof wall 11a in a way that superimposes these walls on each other with predetermined clearances C.

Note that the circular-arc rib 14 of the upper shell 21 is superimposed on the circular-arc rib 19 of the lower shell 22 inwardly (on the side of the optical disc accommodating portion) of the first dust infiltration blocking portion 11, wherein a dust infiltration blocking portion is also configured in this area.

As shown in FIGS. 6 and 9, a slide surface (contact surface) between the lower shell 22 and the shutter unit 5 is provided with a second crank-shaped dust infiltration blocking portion 12 for blocking the dusts infiltrating into an area on the side of the optical disc 3 from the aperture portion 6 in the first position where the shutter unit 5 closes the aperture portion 6 of the lower shell 22.

The second dust infiltration blocking portion 12 is constructed of a rib-shaped protruded portion 12a provided on the lower shell 22 so as to surround the aperture portion 6, and a groove-shaped recessed portion 12b formed in the shutter unit 5 so that the rib-shaped protruded portion 12a is fitted in this recessed portion 12b when moving to the first position where the shutter unit 5 closes the aperture portion 6.

Inclined faces 12c are formed with side end portions of the rib-shaped protruded portion 12a and of the groove-shaped recessed portion 12b in a widthwise direction, whereby the rib-shaped protruded portion 12a gets easy to exit the groove-shaped recessed portion 12b when the shutter unit 5 moves to the second position in which to open the aperture portion 6 from the first position in which to close the aperture portion 6. Further, a third rugged dust infiltration blocking portion 13 is provided on a more inside face than the second dust infiltration blocking portion 12 on the slide surface of the shutter unit 5.

As shown in FIG. 6, the aperture portion 6 formed extending from the central portion of the lower shell 22 to the front edge portion 22b, serves to make the turn table of an optical disc rotary drive mechanism on the side of the recording/reproducing apparatus and an optical head of an optical pickup device approach the optical disc 3. A breadth of the aperture portion 6 is set large enough to permit the turntable and the optical head to come in and out without any restrictions.

The rib-shaped protruded portion 12a configuring the second dust infiltration blocking portion 12 in FIG. 9, is formed in substantially an H-like shape in plane so as to surround the aperture portion 6 and with a height of approximately 0.5 mm. Four pieces of side end portions of the rib-shaped protruded portion 12a taking substantially the H-like shape are provided with first through fourth closed portions 12d through 12g. Each of the first through fourth closed portions 12d through 12g is formed with a height that is approximately four times the height of the rib-shaped protruded portion 12a.

The four side end portions of the rib-shaped protruded portion 12a taking substantially the H-like shape are connected to the circular-arc ribs 19 via the first through fourth closed portions 12d through 12g. Further, boss-shaped protruded portions 20 to be inserted into elongate holes 53 of the pair of shutter portions 5a, 5b in FIG. 4, are provided on the inner surface of the lower shell 22.

The boss-shaped protruded portions 20 are formed one by one on both sides, wherein the rib-shaped protruded portion 12a taking substantially the H-like shape is interposed therebetween.

Moreover, as shown in FIG. 3, an aperture window 30 for exposing part of a gear portion 43 provided on the outer peripheral surface of the inner shell 4, is provided at substantially a central portion between one side edge portions 21d, 22d of the upper shell 21 and of the lower shell 22. This aperture window 30 is structured of an upper shell sided botch portion 30a formed in the upper shell 21 and a lower shell sided notch portion 30b formed in the lower shell 22.

Further, the one side edge portions 21d, 22d of the upper shell 21 and of the lower shell 22 are formed with guide grooves 31 extending in front-and-rear directions along a joint face between these one side edge portions 21d, 22d. The guide grooves 31 are formed for preventing mis-insertion, etc. when loading the disc cartridge 1 into the recording/reproducing apparatus. The aperture window 30 communicates with the guide grooves 31.

As shown in FIGS. 2 and 6, a lock member accommodating portion 33 for rotatably accommodating a lock member 32 is provided at a corner portion between the front side edge portion 22b and the one side edge portion 22d of the lower shell 22. The lock member accommodating portion 33 communicates with the accommodating portion of the inner shell, etc. of the lower shell, and also communicates with the guide groove 31 via a bore 34 formed in the one side edge portion 22d. Further, the lock member accommodating portion 33 of the lower shell 22 is provided with a support spindle 35 for rotatably supporting the lock member 32 so that the support spindle 35 protrudes toward the upper shell 21.

The lock member 32 is formed as a lever-like member rotatably fitted to the support spindle 35 and swingable in a plane-direction. One side end of the lock member 32 in a longitudinal direction is provided with a stopper portion having a plurality of teeth, while the other side end thereof in the longitudinal direction is provided with an operating portion 37. Furthermore, the lock member 32 is provided integrally with a spring piece 38 protruding in the same direction as the stopper portion 36 does in a way that faces the stopper portion 36.

The lock member 32 is constructed such that the stopper portion 36 is fitted to the support spindle 35 in a state of being directed to the accommodating portion of the inner shell, etc., and the spring piece 38 abuts on the inner face of the front edge portion 22b. The stopper portion 36 is biased toward the accommodating portion of the inner shell, etc. by a spring force of the spring piece 38, and the operating portion 37 penetrates the bore 34 from the inside and protrudes into the guide groove 31.

Further, a mis-erasing preventive member 92 for preventing mis-erasing of information recorded on the optical disc is fitted to a mis-erasing preventive member fitting portion 91 provided at the corner portion between the one side edge portion 22c and the rear edge portion 22e of the lower shell 22.

As described above, in the disc cartridge 1, the respective dust infiltration blocking portions eliminate the possibility of the infiltration of dusts, wherein the interior accommodating the optical disc 3 is surely set in a shielded state. This configuration is therefore preferable to a case of accommodating the optical disc such as a Blu-ray disc on which high-density recording or reproducing is effected by use of small-diameter laser beam spots of blue-violet laser beams having a wavelength of approximately 405 nm.

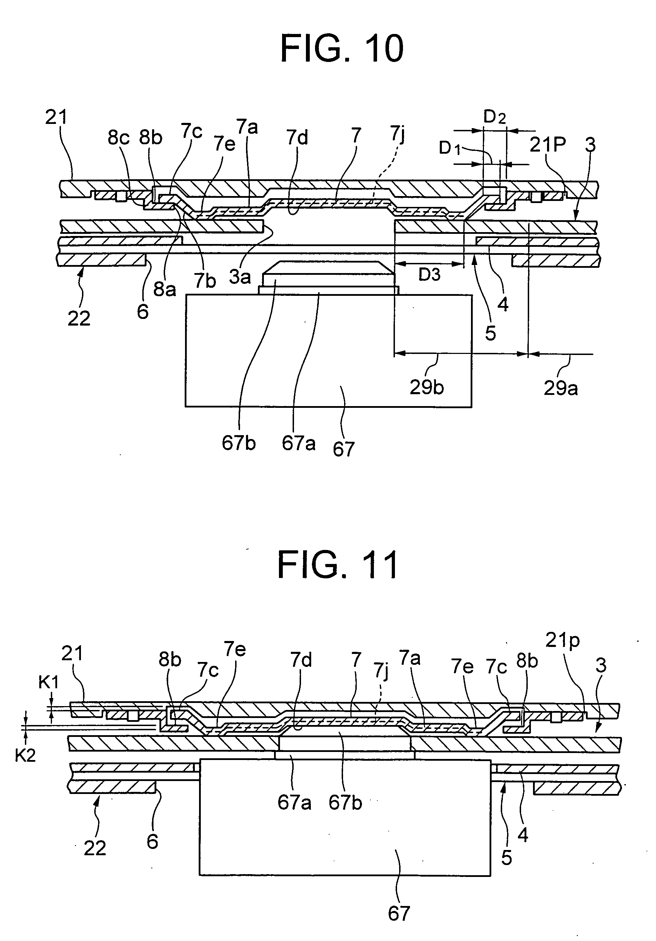

The clamp member in FIGS. 2 and 4 will be explained with reference to FIGS. 7, 10 and 11. FIG. 10 is a principal sectional view showing a pre-clamped state of the clamp member of the cartridge loaded into the recording/reproducing apparatus. FIG. 11 is a principal sectional view showing a state where the clamp member of the cartridge loaded into the recording/reproducing apparatus is clamped down to a clamp shaft on the side of the apparatus.

At first, to describe characteristics required of a material, etc. of the clamp member, it is required that a temperature diffusion coefficient thereof be larger than at least that of a substrate material of the optical disc, whereby the heat transferred to the optical disc from the clamp shaft can escape to the clamp member as soon as possible.

Further, a volume of the clamp member is set within a range of 0.5 cm$^3$ through 2 cm$^3$. Besides, there is employed the clamp member having a heat capacity larger than that of an area, e.g., a portion having a diameter of approximately 30 mm, which corresponds to the clamp member in the vicinity of the central hole of the optical disc substrate. This contrivance avoids a scale-up of the clamp member on the occasion of being mounted in the cartridge and enables the clamp member to sufficiently absorb the heat transferred to the optical disc from the clamp shaft.

As shown in FIGS. 7 and 10, the clamp member 7 is configured in a circular shape on the whole, and includes a circular bottom face portion 7a, a conic peripheral portion 7b provided on an outer peripheral portion of the bottom face portion 7a, and a collar portion 7c provided on the side of a large-diameter portion of the conic peripheral portion 7b.

A central portion of the circular bottom face portion 7a is formed with a conic recessed portion 7d that receives, via a central hole 3a of the optical disc 3, insertion of the front end portion of a clamp shaft 67b of a turn table 67 on the side of the recording/reproducing apparatus. The peripheral edge portion of the bottom face portion 7a is provided with a ring-shaped protruded portion 7e abutting on the surface of the optical disc 3 via a sheet member 7j made of a mild steel which will be explained later on and thus pressing the optical disc 3 on the vicinity of the central hole 3a.

The clamp member 7 is made of a plate material of aluminum that has a large temperature diffusion coefficient and a light weight. The clamp member 7 is formed integrally by press-working this type of plate material. Note that other materials capable of forming the clamp member 7 are exemplified such as an aluminum alloy, copper, a copper alloy, silver, a silver alloy and so on. The temperature diffusion coefficient of the plate material of the clamp member 7 is larger than that of the substrate material of the optical disc 3 and equal to or larger than that of the material of the clamp shaft on the side of the apparatus.

Further, the volume of the clamp member 7 is set within the range of 0.5 cm$^3$ through 2 cm$^3$ in order to enable the cartridge to accommodate the clamp member 7. Moreover, the heat capacity of the plate material of the clamp member 7 is set larger than a heat capacity of the substrate material of the optical disc in an area, corresponding to the clamp member, in the vicinity of the central hole of the optical disc substrate, e.g., as shown in FIG. 10, in a doughnut-shaped circular area D3 extending from the end portion of the central hole 3a to the vicinity of the protruded portion 7e having a diameter of approximately 30 mm. This contrivance enables the clamp member to absorb much of the heat applied to the optical disc, whereby an ambient temperature of the central hole 3a of the optical disc can be restrained from rising for comparatively a long period of time.

Chucking based on the magnetic attraction can be attained by adding a sheet made of a magnetic material such as the mild steel a stainless steel to a non-magnetic material among the respective materials for the clamp member 7. To be specific, as shown in FIGS. 10 and 11, a sheet material 7j of the milt steel exhibiting the large temperature diffusion coefficient is attached to the clamp member 7 by bonding or the like so as to get close to a magnet at the front end of the clamp shaft 67 and to come into contact with a vicinal portion of the central hole 3a of the optical disc 3. With this contrivance, the clamp member 7 is attracted to the front end portion, composed of the permanent magnet, of the clamp shaft 67b.

As shown in FIGS. 7 and 10, the clamp presser member 8 is configured in the circular shape having the central hole on the whole. The clamp presser member 8 includes a larger-diameter hole 8a than the peripheral wall 7b of the clamp member 7 at its central portion, a ring-shaped bottom face portion 8b formed larger in its diameter than the collar portion 7c of the clamp member 7, a peripheral wall portion 8c provided along a peripheral portion of the bottom face portion 8b, and a collar-shaped fixing portion 8d provided extending along from the front end side of the peripheral wall portion 8c up to the outer periphery. First and second alignment pin insertion holes 8e, 8f are formed in positions, opposite to each other in a diametrical direction, of the collar-shaped fixing portion 8d. The first alignment pin insertion hole 8e is formed as a round hole, while the second alignment pin insertion hole 8f is formed as an elongate hole.

Further, a width D1 of the collar portion 7c of the clamp member 7 is set smaller than a width D2 of the ring-shaped bottom face portion 8b of the clamp presser member 8. Moreover, a welding rib 8g is provided on a fitting face of the collar-shaped fixing portion 8d to the upper shell 21. The clamp presser member 8 is integrally formed of a synthetic resin, etc. by injection molding.

When attaching the clamp presser member 8 to the upper shell 21, the collar portion 7c of the clamp member 7 is placed within the first recessed portion 21p of the upper shell 21. Next, the fixing portion 8d of the clamp presser member 8 is placed within the second recessed portion 21s of the upper shell 21, and the first and second alignment pins 21q, 21r provided on the second recessed portion 21s are inserted into the first and second pin insertion holes 8e, 8f. Then, in a state where the clamp presser member 8 is aligned (positioned), the front end of the welding rib 8g is melted by applying supersonic vibrations thereto, whereby the clamp presser member is joined by welding to the upper shell 21.

As described above, the clamp member 7 is so held by the clamp presser member 8 against the inner face of the upper sell as to be movable in the vertical directions in FIG. 10. Specifically, as shown in FIG. 10, the clamp member 7 is held such that the collar portion 7c of the clamp member 7 is supported on the ring-shaped bottom face portion 8b of the clamp presser member 8, the bottom face portion 7a of the clamp member 7 droops from the hole 8a formed in the ring-shaped bottom face portion 8b of the clamp presser member 8, and, on this occasion, the bottom face portion 7a is automatically centered at the center of the hole 8a since the peripheral wall portion 7b of the clamp member 7 is formed in the conical shape.

When centering, in FIG. 10, the width D1 of the collar portion 7c of the clamp member 7 is set smaller than the width D2 of the ring-shaped bottom face portion 8b of the clamp presser member 8, and hence the outer peripheral face of the collar portion 7c of the clamp member 7 and the inner peripheral face of the peripheral wall portion 8c of the clamp presser member 8, are kept in a non-contact state.

Further, as shown in FIG. 11, the non-contact state is kept by ensuring sufficient gap dimensions for a clearance K1 in the vertical direction in FIG. 11 between a lower face of the collar portion 7c of the clamp member 7 and the ring-shaped bottom face portion 8b of the clamp presser member 8 and for a clearance K2 between an upper face of the collar portion 7c and the inner face of the upper shell 21.

The operation of the clamp member described above will be explained.

When loading the disc cartridge 1 into the recording/reproducing apparatus, a relative position between the disc cartridge 1 and the turntable of the apparatus is given as shown in FIG. 10.

Next, as illustrated in FIG. 11, the optical disc 3 within the disc cartridge 1 is placed on a table body portion 67a of the turntable 67, the front end portion of the clamp shaft 67b enters the circular recessed portion 7d of the clamp member 7. Then, the clamp member 7 is magnetically attracted through its sheet material 7j made of the mild steel, and the optical disc 3 is pinched between the table body portion 67a and the clamp member 7 and is thus clamped. At the same time, the collar portion 7c of the clamp member 7 is set in the non-contact state away from the bottom face portion 8b of the clamp presser member 8, and therefore the optical disc 3 and the clamp member 7 become rotatable.

In the manner described above, the optical disc 3 is chucked by the clamp member 7 down to the turntable 67 of the recording/reproducing apparatus, and is rotated at a predetermined speed while being integral with the table 67 in a rotating direction. Then, as shown in FIG. 10, one surface of the optical disc 3 is formed with an information recording area 29a capable of recording the information and with a non-recording area 29b incapable of recording the information. Then, the optical head of the recording/reproducing apparatus is positioned facing the information recording area 29a, wherein the information can be recorded on and reproduced from the optical disc 3.

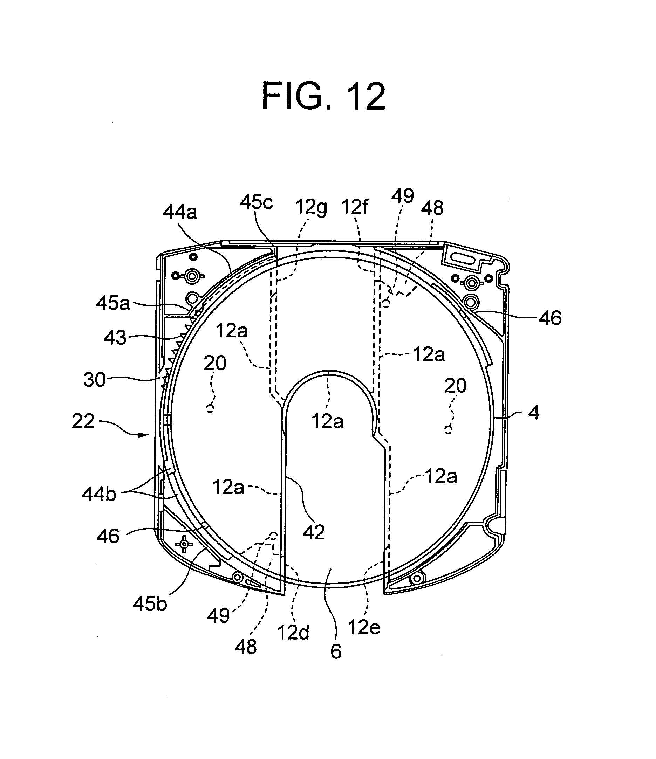

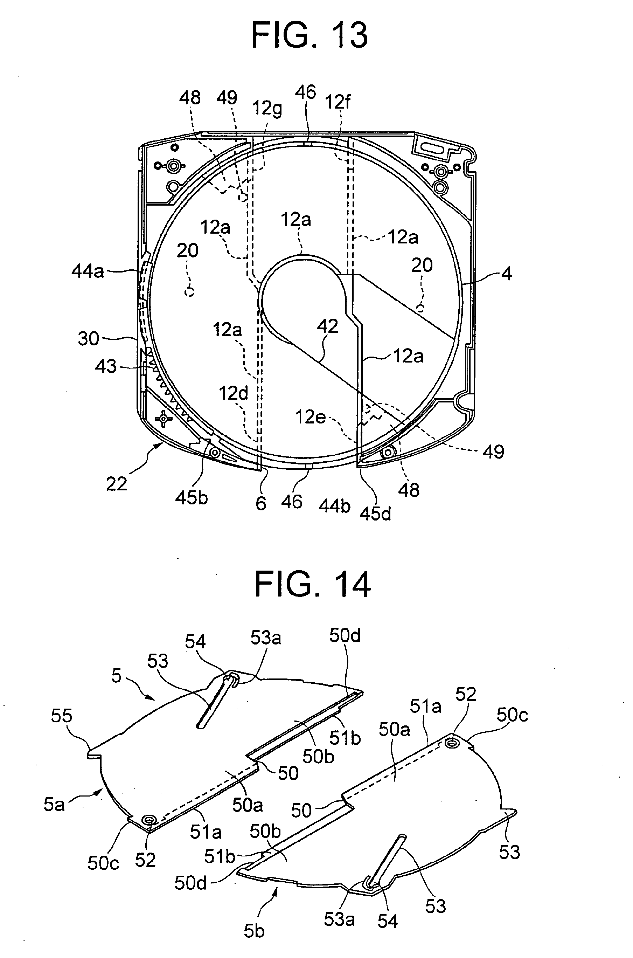

Subsequently, the inner shell for rotatably accommodating the optical disc within the cartridge box body 2, will be explained with reference to FIGS. 2, 12, 13 and 20. FIG. 12 is a plan view showing a state where the aperture portion of the inner shell incorporated into the lower shell in FIG. 2 is aligned with the aperture portion of the lower shell. FIG. 13 is a plan view showing a state where the aperture portion of the inner shell incorporated into the lower shell in FIG. 2 is deviated from the aperture portion of the lower shell.

As shown in FIGS. 2 and 4, the inner shell 4 is so formed as to be capable of accommodating the optical disc. The inner shell 4 includes a flat portion 40 made of a disc-like thin plate material and a ring portion 41 formed in continuation from an outer peripheral edge of the flat portion 40. The flat portion 40 of the inner shell 4 is formed with an aperture portion 42 of which a shape and a size are substantially the same as those of the aperture portion 6 of the lower shell 22.

The ring portion 41 is formed in a cylindrical shape having a slightly larger diameter than an outside diameter of the ring-shaped rib 15 of the upper shell 21. The ring portion 41 protrudes (upward) along the outer periphery to form a space which the optical disc 3 resides in. The ring portion 41 is rotatably fitted in the outer peripheral portion of the ring-shaped rib 15, wherein the front end portion of the ring portion 41 is inserted into a ring-shaped recessed portion 17 provided outwardly of the ring-shaped rib 15.

As shown in FIGS. 2 and 12, the outer peripheral face of the ring portion 41 of the inner shell 4 is provided with a gear portion 43 having a multiplicity of teeth extending over a predetermined range in the peripheral direction. The gear portion 43 is provided to have an angular range that is slightly larger than an angle of rotation of the inner shell 4.

As shown in FIG. 13, the aperture portion 42 of the inner shell 4 is rotated most for the aperture portion 6 of the lower shell 22, and, when the pair of shutter portions 5a, 5b come to a closed state, one end of the gear portion 43 in the peripheral direction gets exposed from the aperture window 30. Further, as illustrated in FIG. 12, the inner shell 4 is rotated through a predetermined angle, and the aperture portion becomes aligned with the aperture portion 6. In this state, when the pair of shutter portions 5a, 5b are completely opened, the other end of the gear portion 43 in the peripheral direction is exposed from the aperture window 30.

Stopper portions 44a, 44b for restricting an amount of rotational movement of the inner shell 4 are so provided on both sides of the gear portion 43 of the inner shell 4 as to protrude outside in the radial direction. The gear portion 43 and the stopper portions 44a, 44b are thus protruded outside from the outer peripheral face of the ring portion 41, and hence portions, corresponding to these protruded portions, of the upper shell 21 and of the lower shell 22 are respectively formed with escape grooves 45a, 45b for permitting the stopper portions 44a, 44b, etc. to pass through in a way that avoids contacts therewith.

As illustrated in FIG. 12, when the aperture portion 42 of the inner shell 4 and the aperture portion of the lower shell 22 come to their aligned state, one end portion of the stopper portion 44a engages with a stopper engaging portion 45c provided at one end portion of the escape groove 45a, thereby blocking a further rotation of the inner shell 4. Moreover, as shown in FIG. 13, when the aperture portion 42 of the inner shell 4 comes to a state of being inclined most to the aperture portion 6 of the lower shell 22, one end portion of the stopper portion 44b engages with a stopper engaging portion 45d provided at one end portion of the aperture portion 6, thereby blocking a further rotation of the inner shell 4.

Moreover, lift-up protruded portions 46 are provided in two positions in the peripheral direction on the front end face of the ring portion 41. These lift-up protruded portions 46 on the inner shell side, as shown in FIG. 13, run on the lift-up protruded portions 18 provided within the ring-shaped recessed portion 17 of the upper shell 21 in the state where the aperture portion 42 of the inner shell 4 is rotated most for the aperture portion 6 of the lower shell 22.

Further, as shown in FIG. 12, a pair of support spindles 49, 49 for rotatably supporting the pair of shutter portions 5a, 5b in a plane direction are provided on the surface, on the opposite side to the ring portion 41, of the flat portion 40 of the inner shell 4. The pair of support spindles 49, 49 are provided one by one, showing a point symmetry with respect to the aperture portion 42.

Moreover, trapezoidal protruded portions 48, 48 for release from the fitting, of which a height is substantially the same as that of the rib-shaped protruded portion 12a taking substantially the H-shape that is provided on the lower shell 22, are provided in the vicinities of the pair of support spindles 49, 49. These protruded portions 48, 48 for the release from the fitting serve to extract the rib-shaped protruded portion 12a out of the groove-shaped recessed portion 12b when moving to the position (the second position) in FIG. 12 where the shutter portions 5a, 5b unclose the aperture portion 6 from the position (the first position) in FIG. 13 where the shutter portions 5a, 5b close the aperture portion 6. The trapezoidal protruded portions 48, 48 for the release from the fitting are positioned sideways of the second and fourth closed portions 12e, 12g provided at the end portions of the rib-shaped protruded portion 12a taking substantially the H-shape that is provided on the lower shell 22 in the position shown in FIG. 13.

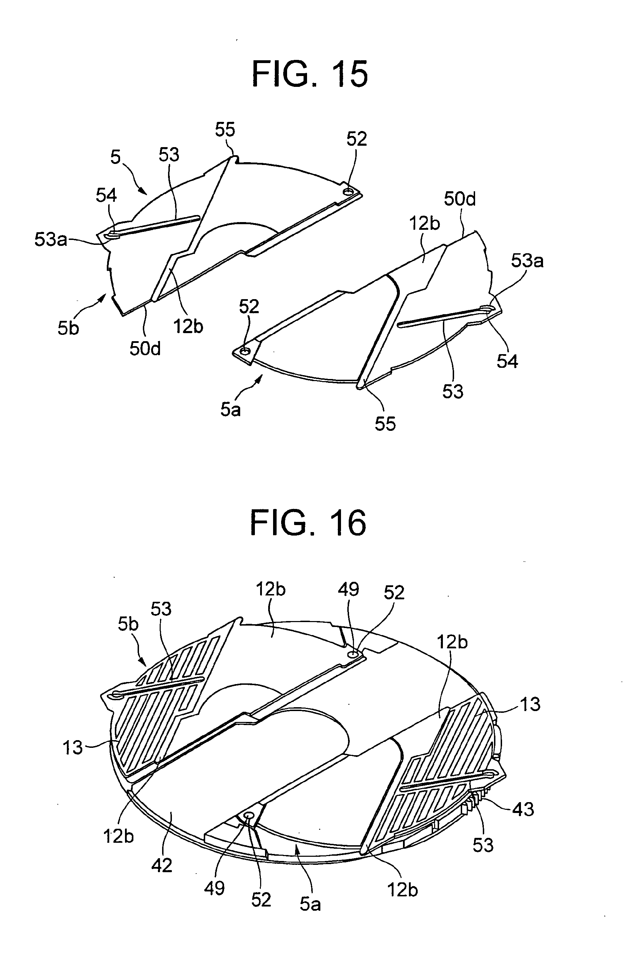

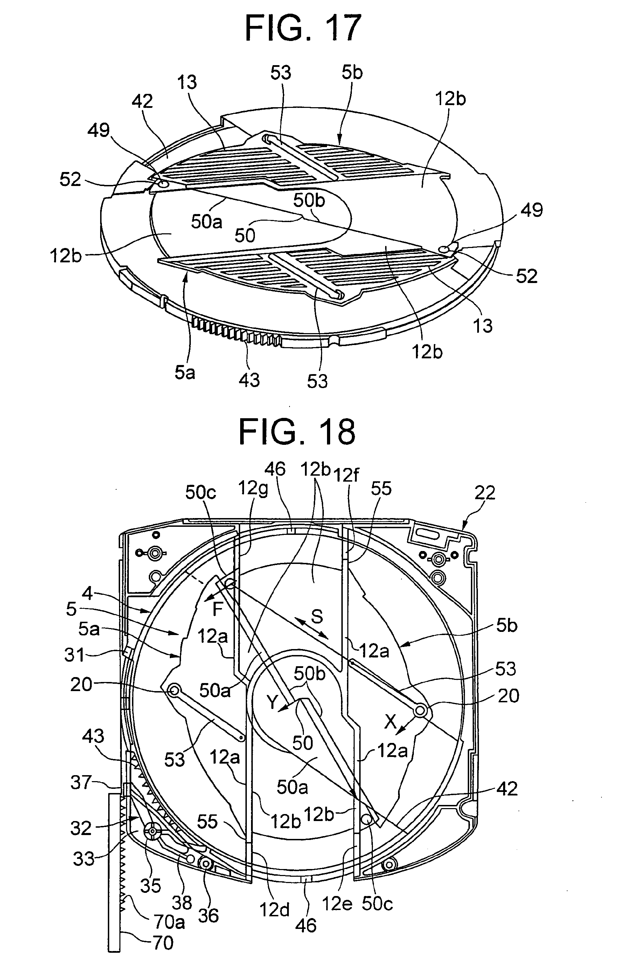

Next, the shutters in FIGS. 2 and 4 will be described with reference to FIGS. 14 to 17. FIG. 14 is a perspective view of the shutter in FIG. 2 as viewed from the upper face. FIG. 15 is a perspective view of the shutter in FIG. 4 as viewed from the lower face. FIG. 16 is a perspective view showing a state where the shutter members in FIGS. 14 and 15 are attached to the inner shell in FIG. 4, and the aperture portions are opened. FIG. 17 is a perspective view showing a state where the shutter members in FIGS. 14 and 15 are attached to the inner shell in FIG. 4, and the aperture portions are closed.

As illustrated in FIGS. 2, 4, 14 and 15, the shutter unit 5 is constructed of the pair of shutter portions 5a, 5b formed in substantially the same shape and size. The pair of shutter portions 5a, 5b are each composed of a plate member of which a plate thickness is substantially the same as the height of each of the first through fourth closed portions 12d - 12g of the rib-shaped protruded portion 12a, taking substantially a semi-circular shape, of the lower shell 22 in FIG. 9. Stepped portions 50 each formed to a predetermined length in a direction orthogonal to a line of chord, are provided at substantially a central portion of the chord side of each of the shutter portions 5a, 5b. A protruded joint portion 50a and a recessed joint portion 50b are formed through the stepped portions 50 on both sides. Further, the respective joint portions 50a, 50b are provided with protruded portions 51a, 51b protruding in an eave-like shape in a direction orthogonal to the chord extending direction.

In the pair of shutter portions 5a, 5b, an end face of the protruded joint portion 50a and an end face of the recessed joint portion 50b thereof face each other, and the protruded portion 51a of the protruded joint portion 50a is superimposed on a protruded portion 51b of the recessed joint portion 50b. Bearing holes 52 are formed in spindle receiving portions 50c at the end portions of the recessed joint portions on the chord sides of the shutter portions 5a, 5b.

Notched portions 50d for introducing the second closed portion 12e or the fourth closed portion 12g provided at the end portion of the rib-shaped protruded portion 12a, taking substantially the H-shape, of the lower shell 22, are provided at the end portions of the recessed joint portions 50b on the chord sides of the shutter portions 5a, 5b.

The respective shutter portions 5a, 5b are rotatably attached to the inner shell 4 by fitting the support spindles, 49, 49 shown in FIG. 16 into the bearing holes 52. On this occasion, the pair of shutter portions 5a, 5b are attached in such a way that the chord sides thereof face each other. As a result, as illustrated in FIG. 16, the pair of shutter portions 5a, 5b are, when rotated to separate away from each other toward the outside, so placed as to be superimposed on the side portions thereof on both sides, with the aperture portion 42 of the inner shell 4 being interposed therebetween. On the other hand, the joint portions 50a, 50b of the pair of shutter portions 5a, 5b are abutted on each other by rotating these shutter portions 5a, 5b inwardly, whereby the central portion of the aperture portion 42 is, as illustrated in FIG. 17, closed by the pair of shutter portions 5a, 5b.

Further, as shown in FIGS. 14 to 17, elongate holes (opening/closing grooves) 53 for opening and closing the shutter portions 5a, 5b are formed in the recessed joint portions 50b of the shutter portions 5a, 5b. The respective elongate holes 53 are formed extending in radial directions about the bearing holes 52 of the shutter portions 5a, 5b formed with these elongate holes 53. A boss-shaped protruded portion 20 of the lower shell 22 is slidably engaged with the elongate hole 53. Moreover, outward end portions of the respective elongate holes 53 are provided with elastic pieces 54 formed by notching along the periphery and with recessed portions 53a for letting the boss-shaped protruded portions 20 escape. Further, protruded pieces 55 for closing are provided at the ends of the circular arcs of the shutter portions 5a, 5b. In a state where the shutter is closed, the protruded piece 55 of the shutter portion 5a abuts on the first closed portion 12d of the lower shell 22, while the protruded piece 55 of the shutter portion 5b abuts on the third closed portion 12f of the lower shell 22, thereby closing a gap therebetween.

Moreover, as shown in FIGS. 16 and 17, the groove-shaped recessed portions 12b configuring the second dust infiltration blocking portion 12 by engaging with the rib-shaped protruded portions 12a taking substantially H-shape, are formed in the slide faces of the shutter portions 5a, 5b with respect to the lower shell 22. In the state where the shutter portions 5a, 5b close the aperture portion 42, the rib-shaped protruded portions 12a of the lower shell 22 are fitted in the grooved-shaped recessed portions 12b. Furthermore, the third dust infiltration blocking portion 13 structured of the multiplicity of rugged portions is provided inwardly of the second dust infiltration blocking portion 12.

The shutter portions 5a, 5b involve using, as materials, synthetic resins such as an ABS resin (acrylonitrile butadiene styrene resin), HIPS (high impact polystyrene), POM (polyacetal) and so forth, and further preferable materials are of a type given slidability. Moreover, other synthetic resins are applicable, and metallic materials such as an aluminum alloy, a stainless steel, etc. may also be employed.

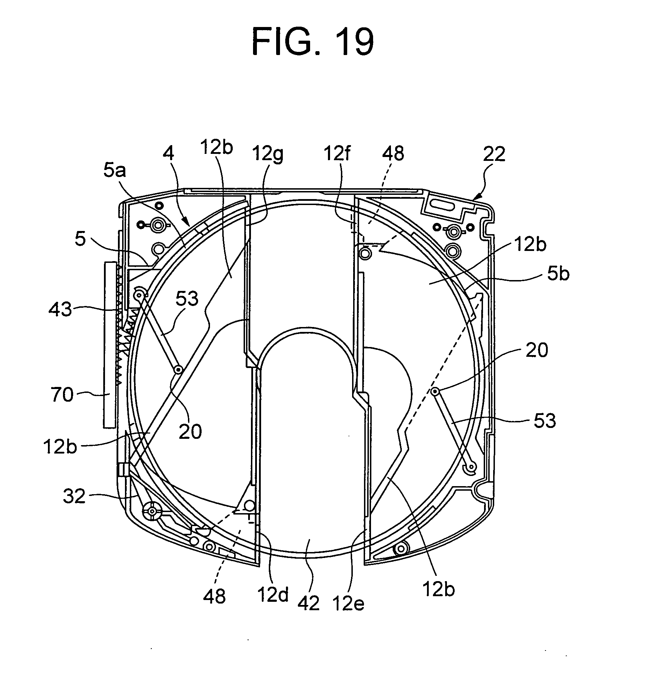

Next, an operation of the aforementioned disc cartridge will be explained with reference to FIGS. 18 and 19. FIG. 18 is a plan view showing a state where the shutter in FIG. 17 completely closes the aperture portion. FIG. 19 is a plan view showing a state where the shutter in FIG. 16 completely uncloses the aperture portion.

As shown in FIGS. 1 and 3, when the lower shell 22 is superimposed on the upper shell 21 so that the aperture portion 6 of the lower shell 22 is aligned with the aperture portion 42 of the inner shell 4, the recording face of the optical disc 3 appears outside via the aperture portions 6 and 42. From this state, the inner shell 4 is rotated in one direction by operating the gear portion 43 provided along the outer periphery of the inner shell 4. Then, as shown FIG. 8, the joint portions 50a, 50b of the shutter portions 5a, 5b are superimposed on each other, thus closing the aperture portion 6 of the lower shell 22.

Before the disc cartridge 1 is loaded into the recording/reproducing apparatus, the pair of shutter portions 5a, 5b of the shutter unit 5 are maintained by their self-weights and a frictional force, etc. caused between the lower shell 22 and the inner shell 4 in such a state that the aperture portion 6 of the lower shell 22 and the aperture portion 42 of the inner shell 4 are completely closed. Further, there occurs a state wherein two pieces of lift-up protruded portions 46 of the inner shell 4 run on two pieces of lift-up protruded portions 18 provided in the ring-shaped recessed portions 17 of the upper shell 21. Therefore, the pair of shutter portions 5a, 5b are in a state of their being pinched from both sides by the upper shell 21 and the inner shell 4.

As shown in FIG. 18, a spring force of the spring piece 38 of the lock member 32 causes the stopper portion 36 to engage with the gear portion 43 of the inner shell 4. Therefore, the pair of shutter portions 5a, 5b are set in a state of their being dually locked.

When the aforementioned disc cartridge 1 is loaded into the recording/reproducing apparatus, as shown in FIG. 18, a rack bar 70 of a shutter opening/closing mechanism of the recording/reproducing apparatus enters the guide groove 31 formed in the side face portion of the disc cartridge 1, whereby the operating portion 37 of the lock member 32 protruding into the guide groove 31 is intruded into the lock member accommodating portion 33 by a pressing force of the rack bar 70 while resisting a biasing force of the spring piece 38. Further, as the rack bar 70 relatively advances, a front end of a gear portion 70a meshes with the gear portion 43 of the inner shell 4, and the inner shell 4 rotates corresponding to an amount of movement of the rack bar 70.

As shown in FIG. 18, the rack bar 70 enters the guide groove 31m, corresponding to the loading of the disc cartridge 1, and, when the gear portion 70a thereof starts meshing with the gear portion 43 of the inner shell 4, the inner shell 4 is rotated counterclockwise. In this case, in an initial state where the inner shell 4 starts rotating, the lift-up protruded portions 46 of the inner shell 4 run on the lift-up protruded portions 18 of the upper shell 21, and the pair of shutter portions 5a, 5b are pinched between the inner shell 4 and the upper shell 21. Hence, the rotating operation of the inner shell 4 requires comparatively a large force. The inner shell 4 is rotated resisting a large frictional force caused when the lift-up protruded portions 18, 46 run on each other, whereby the lift-up protruded portions 46 disengage from the lift-up protruded portions 18 with the result that the frictional force vanishes. Consequently, thereafter the inner shell 4 can be rotated extremely lightly and smoothly.

As the inner shell 4 is rotated, the trapezoidal protruded portions 48, 48 for the release from the fitting, which are provided on the bottom face of the inner shell 4, run on the first and third closed portions 12d, 12f of the rib-shaped protruded portion 12a of the lower shell 22, and the inner shell 4 comes to a state of being lifted from the lower shell 22. At the same time, the shutter portions 5a, 5b are likewise raised, and there occurs a state in which the grooved-shaped recessed portion 12b exit the rib-shaped protruded portion 12a.

At this time, the respective bearing holes 52 of the shutter portions 5a, 5b are similarly rotated by the rotation of the inner shell 4, and on the other hand the boss-shaped protruded portions 20, 20 of the lower shell 22 are slidably engaged with the elongate holes 53 formed in the other end portion. The pair of boss-shaped protruded portions 20, 20 are provided on the lower shell 22 but do not move. While on the other hand, the elongate holes 53 extend in a direction S that connects the bearing hole 52 to the boss-shaped protruded portion 20 so as to enable relative movements of the boss-shaped protruded portions 20, 20 in a way that follows up with the rotations of the shutter portions 5a, 5b. With this contrivance, the boss-shaped protruded portions 20 relatively move toward the bearing holes 52 along within the elongate holes 53 in accordance with the amounts of rotations of the shutter portions 5a, 5b. In the respective shutter portions 5a, 5b, the bearing holes 52 are thereby moved toward the corresponding boss-shaped protruded portions 20. As a result, the shutter portions 5a, 5b move, as shown in FIG. 19, to the portions on both sides of the aperture portion 42 of the inner shell 4, whereby the upper and lower aperture portions 6, 42 are completely opened. Consequently, part of the optical disc 3 housed in the optical disc accommodating portion gets exposed through the aperture portions 6, 42.

The turntable 67 and the optical head (not shown) can be inserted into the aperture portions 6, 42 in the manner described above (see FIG. 10). Then, as illustrated in FIG. 11, with the relative movements of the turn table 67, etc. to the disc cartridge 1, the turn table 67 and the optical head enter the aperture portion 6, and the optical disc 3 within the disc cartridge 1 is placed on the table body portion 67a of the turn table 67. Then, the front end portion of the clamp shaft 67b advances into the circular recessed portion 7d of the clamp member 7, the clamp member 7 is magnetically attracted through its sheet material 7j, and the optical disc 3 is pinched between the table body portion 67a and the clamp member 7 and is thus clamped. At this time, the collar portion 7c of the clamp member 7 is set in the non-contact state away from the bottom face portion 8b of the clamp presser member 8, and therefore the optical disc 3 and the clamp member 7 become rotatable.

Next, the optical disc 3 is rotated at a predetermined speed in a predetermined rotating direction by the turn table 67 of the recording/reproducing apparatus, and the optical head of the recording/reproducing apparatus records or reproduces the information signals on or from the optical disc 3 while facing the information recording area 29a on the optical disc 3.

After recording or reproducing as described above, for example, the disc cartridge 1 is ejected out of the recording/reproducing apparatus by the aid of an operation of the loading mechanism of the recording/reproducing apparatus. At this time, as the disc cartridge 1 moves, the rack bar 70 in FIG. 19 relatively recedes. Along with the recession of the rack bar 70, the inner shell 4 and the pair of shutter portions 5a, 5b perform operations reversed to those when inserted as described above, thereby completely closing the aperture portions 6, 42 on the whole as in FIG. 18.

As described above, when loading the disc cartridge 1 into the recording/reproducing apparatus in order to effect recording or reproducing, as shown in FIG. 11, the clamp shaft 67b of the turn table 67 of the recording/reproducing apparatus is fitted into the central hole 3a of the optical disc 3, and the sheet material 7j in the recessed portion 7d of the clamp member 7 is magnetically attracted to and thus brought into contact with the front end portion of the clamp shaft 67b. In this contact state, when the optical disc 3 is employed in the recording/reproducing apparatus, an internal temperature of the apparatus is as high as approximately 50°C through 60°C, and hence the heat thereof is transferred from the turn table 67 to the portion vicinal to the central hole 3a of the optical disc 3 and to the clamp member 7 via the table body portion 67a and the clamp shaft 67b. At this time, the heat from the clamp shaft 67b of the turn table 67 is easier to transfer to the clamp member 7 than to the central hole 3a of the optical disc 3 because of the clamp member 7 being made of the plate material exhibiting the larger temperature diffusion coefficient than that of the optical disc substrate 3.

As discussed above, much of the heat from the apparatus escapes to the clamp member 7, thereby reducing the heat transferred to the information recording face 29a on the optical disc 3 from the central hole 3a. Thus, the heat from the recording/reproducing apparatus can be restrained from affecting the optical disc 3. Therefore, a rise in the temperature in the vicinity of the central hole 3a of the optical disc 3 becomes comparatively moderate, and the temperature does not increase so much for the information recording face 29a. It is therefore feasible to decrease a spread of temperature distribution in the radial direction on the optical disc 3. Accordingly, a deformation such as a warp, etc. of the optical disc 3 is reduced, and hence this can meet, e.g., warp standards for the optical disc.

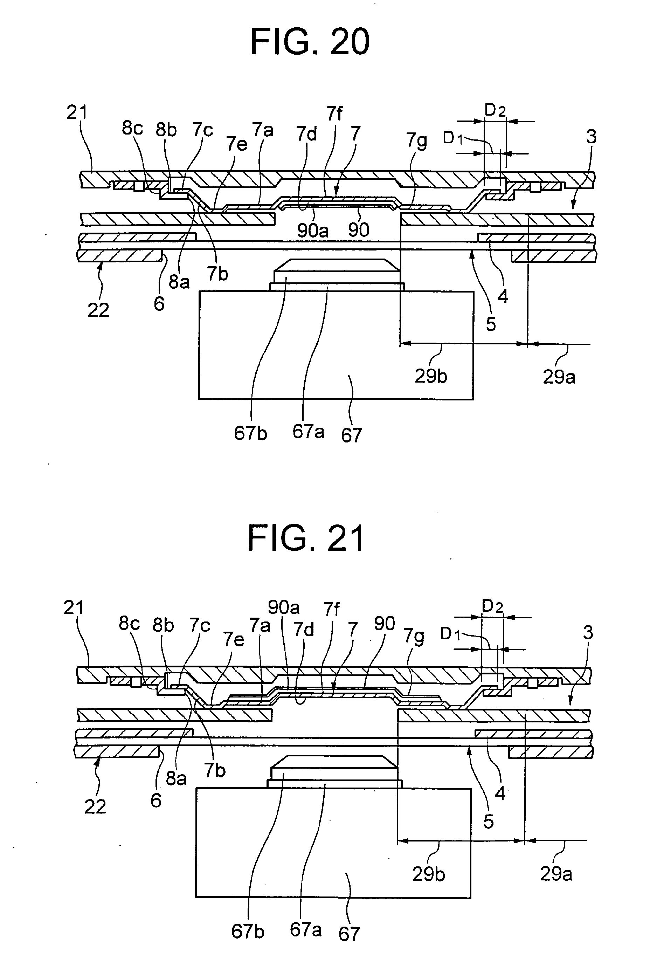

Next, an example of restraining the thermal influence on the optical disc from the apparatus side by adding a material having a large temperature diffusion coefficient to the clamp member of the disc cartridge, will be explained with reference to FIG. 20. FIG. 20 is a principal sectional view, similar to FIG. 10, showing a state before the clamp member of the disc cartridge in FIGS. 1 and 3 is clamped.

The example in FIG. 20 shows the material exhibiting the larger temperature diffusion coefficient than the material of the clamp member 7, wherein the material such as a PGS graphite sheet, etc. unable to be molded in the shape of the clamp member 7 is so disposed as to be tightly fitted to the recessed portion 7d of the central portion of the clamp member 7. In this case, as in FIG. 20, the clamp member 7 is coated or filled with, e.g., a silicon grease that is a material acquired by adding a non-organic filler to an organic material having an adhesive property as a material exhibiting comparatively a large temperature diffusion coefficient and fluidity or semi-fluidity, thereby tightly fitting the material such as the PGS graphite sheet, etc. to the clamp member 7.

To be specific, as shown in FIG. 20, the recessed portion 7d of the central portion of the clamp member 7 in FIG. 7 is filled with a silicon grease 90a up to the vicinity of the bottom face portion 7a, and a PGS graphite sheet 90 is so disposed as to be tightly fitted onto the silicon grease 90a. The PGS graphite sheet 90 is positioned in a way that faces the clamp shaft 67b. Note that the silicon grease has the semi-fluidity and is therefore easy to fill.

In the clamp member 7 shown in FIG. 20, the PGS graphite sheet 90 exhibiting the larger temperature diffusion coefficient than that of the clamp member 7 is disposed in the tightly-fitted manner with the silicon grease 90 interposed therebetween in a range extending up to the vicinity of the bottom face portion 7a, wherein the recessed portion 7d of the central portion is centered. Hence, the heat from the clamp shaft 67b of the turntable 67 of the recording/reproducing apparatus is easier to transfer to the clamp member 7 than to the central hole 3a of the optical disc 3.

When the disc cartridge 1 is loaded into the recording/reproducing apparatus in order to effect the recording or reproducing, similarly to the state in FIG. 11, the clamp shaft 67b of the turn table 67 is fitted into the central hole 3a of the optical disc 3, and the sheet material 7j in the recessed portion 7d of the clamp member 7 is magnetically attracted to and thus brought into contact with the front end portion of the clamp shaft 67b. In this contact state, when the optical disc 3 is used in the recording/reproducing apparatus, the internal temperature of the apparatus is as high as approximately 50°C through 60°C, and hence the heat thereof is transferred from the turn table 67 to the portion vicinal to the central hole 3a of the optical disc 3 and to the clamp member 7 via the table body portion 67a and the clamp shaft 67b. At this time, the heat from the clamp shaft 67b of the turn table 67 is much easier to transfer to the clamp member 7 because of disposing on the clamp member 7 the PGS graphite sheet 90 exhibiting the larger temperature diffusion coefficient than that of the clamp member 7. Therefore, the heat becomes much harder to transfer to the central hole 3a of the optical disc 3.

As discussed above, much of the heat from the apparatus escapes to the clamp member 7, thereby reducing the heat transferred to the information recording face 29a on the optical disc 3 from the central hole 3a. Thus, the heat from the recording/reproducing apparatus can be restrained from affecting the optical disc 3. Therefore, the rise in the temperature in the vicinity of the central hole 3a of the optical disc 3 becomes comparatively moderate, and the temperature does not increase so much for the information recording face 29a. It is therefore feasible to decrease the spread of temperature distribution in the radial direction on the optical disc 3. Accordingly, the deformation such as the warp, etc. of the optical disc 3 is reduced, and hence this can meet, e.g., the warp standards for the optical disc.

The PGS graphite sheet 90 can be tightly fitted to the clamp member 7 by filling or coating the sheet 90 with the silicon grease 90a before incorporating the clamp member 7 into the upper shell 21. Further, the range in which the PGS graphite sheet 90 and the silicon grease 90a are applied extends to only the vicinity of the recessed portion 7d of the central portion or may extend further to the vicinity of the peripheral wall portion 7b along the outer periphery in consideration of a state, etc. of the thermal conduction.

Further, the PGS graphite sheet 90 and the silicon grease 90a may be, as shown in FIG. 21, applied by tightly fitting them to an upper sell 21 sided face extending from the protruded portion 7f to the protruded portion 7g of the clamp member 7, or may also be applied to the double faces of the clamp member 7.

Moreover, referring to FIGS. 20 and 21, the clamp member 7 is made of a ferrite-series stainless steel (SUS) classified as a magnetic material, and a volume of the clamp member 7 can be set to, e.g., 0.35 cm$^3$ as a standard volume of the clamp member. Since the PGS graphite sheet has comparatively the large temperature diffusion coefficient that is on the order of, e.g., $1 \times 10^{-3}$ m$^2$/s, however, the heat from the clamp shaft 67b is efficiently transferred to the clamp member 7, and a desired effect can be acquired.

[Examples]

Next, the present invention will be more specifically described by way of examples. The present invention is not, however, limited to these examples.

The clamp member of the disc cartridge was manufactured by use of materials shown in the following Table 1 in a way that changes the volume by way of examples 1, 2 and comparative examples 1 through 4. The standard volume of the clamp member is 0.35 cm$^3$, and, in addition to this standard size, the clamp member having increased thermal capacity was also manufactured by increasing the size up to a volume of 1.78 cm$^3$.

The cartridge using the respective clamp members in Table 1 accommodates the optical disc, and changes in the warp of the optical disc are measured by causing abrupt environmental changes. The measurement of the warp involves using a high-precision angle measuring device (LA-2000 made by Keyence Corporation). A clamp shaft device capable of retaining and rotating the optical disc is installed in a door-attached case (CGO-1, 30 X 40 X 60 cm, made by Aswan Corporation) having a built-in temperature adjusting means, and the warp angle measuring device is disposed outwardly of the case so that the laser beams are vertically incident on the information face of the retained optical disc. Note that calibration was conducted beforehand by use of a reference glass disc for keeping measurement accuracy.

A method of measuring the abrupt change in the temperature environment is that the door-attached case is set in a state of being retained at 55°C, the optical disc housed in the cartridge stored at -10°C in a refrigerator is taken out as it is and attached to the clamp shaft within the case at 55°C, wherein the measurement was performed. It is of importance to measure a change in a short period of time, and hence a series of processes of taking out and attaching the optical disc and starting the measurement were executed quickly.

The clamp shaft employed for the measurement is made of brass, the substrate of the optical disc is made of polycarbonate (PC), and the Table 1 also shows various categories of data about the clamp shaft and PC as well. In this example, the thermal capacity of the clamp member was set larger than those of the optical disc substrate made of polycarbonate and of the clamp shaft.

The following Table 1 shows results of measuring the warp angle in the respective examples and comparative examples that use the variety of clamp members.

[Table 1]

| | material | specific heat J/g·K | specific gravity g/cm³ | Volume (V) cm³ | weight g | thermal capacity (C) J/K | thermal conductivity (K) W/m·K | temperature diffusivity $\alpha$ m²/s | change in warp degree deg |
|---|---|---|---|---|---|---|---|---|---|
| example 1 | brass | 0.387 | 8.8 | 1.4 | 12.32 | 4.77 | 106 | 3.11E-05 | 0.5(○) |
| | PC | 1.25 | 1.2 | 0.87 | 1.04 | 1.31 | 1.09 | 1.27E-07 | |
| example 2 | Al | 0.86 | 2.7 | 1.78 | 4.81 | 4.13 | 237 | 1.02E-04 | 0.48(○) |
| | copper | 0.385 | 8.96 | 1.78 | 15.95 | 6.14 | 403 | 1.17E-04 | |
| comparative example 1 | SUS | 0.502 | 7.93 | 0.35 | 2.78 | 1.39 | 16 | 4.02E-06 | 0.77(×) |
| comparative example 2 | SUS | 0.502 | 7.93 | 1.78 | 14.12 | 7.09 | 16 | 4.02E-06 | 0.72(×) |
| comparative example 3 | Al | 0.86 | 2.7 | 0.35 | 0.95 | 0.81 | 237 | 1.02E-04 | 0.71(×) |
| comparative example 4 | copper | 0.385 | 8.96 | 0.35 | 3.14 | 1.21 | 403 | 1.17E-04 | 0.68(△) |

○：less than 0.6
△：0.6 to 0.7
×：more than 0.7

15

As can be understood from the Table 1, when comparing the results in the examples 1, 2 with those in the comparative examples 1 through 4, the warp angle becomes smaller as the temperature diffusion coefficient becomes larger, and, if the temperature diffusion coefficient is the same, as seen in a group of the example 2 and the comparative example 4 and in a group of the example 1 and the comparative example 3, an amount of change in the warp becomes smaller with a larger thermal capacity by increasing the volume. Note that as criteria for judging the warp angle, a value equal to or smaller than 0.6 degree is preferable (○), a value of 0.6 to 0.7 degree (Δ) is usable, and a value equal to or larger than 0.7 degree (X) is unusable.

It is to be noted that a temperature diffusion coefficient (temperature diffusivity) $\alpha$ in the Table 1 can be obtained from the following formula.

$$\alpha = K/\rho \cdot c$$

(where K: the thermal conductivity, $\rho$: the specific gravity, c: specific heat)

Further, as for a representation of the temperature diffusion coefficient $\alpha$ in the Table 1, a power (power index) of 10 is expressed such as 1.00E- 04 (= $10^{-4}$) .

As explained above, the thermal capacity of the clamp member is set larger than the thermal capacity of the area, corresponding to the clamp member, of the substrate resin (polycarbonate) of the optical disc. On the other hand, the clamp member is set in the size accommodable in the cartridge. Then, as shown in FIG. 11, there are ensured the mutual clearances K1, K2 sufficient for avoiding the interference between the clamp member and the cartridge during the use of the cartridge, and, in the clamped state of the optical disc, the clamp member is surely prevented from abutting on the inner face of the upper shell 21 and on the clamp fixing portion (the ring-shaped bottom face portion 8b of the clamp presser member 8). For attaining this, the present inventors made an examination taking a scatter in dimension of the clamp member into consideration, and as a result it proved that a preferable range of the volume of the clamp member is 0.5 cm$^3$ through 2 cm$^3$) .

Further, as the volume range has been limited, an upper limit of the thermal capacity is resultantly determined. Namely, if the volume is fixed, the thermal capacity, which is given such as Thermal Capacity = Volume X Specific Gravity X Specific Heat, is determined by physical values of the material, i.e., determined by the specific gravity and the specific heat. It is therefore required for increasing the thermal capacity that the material be changed. When selecting a material showing the large specific gravity and the large specific heat in order to increase the thermal capacity, however, the temperature diffusion coefficient decreases, and hence the requirement is that the thermal conductivity be increased simultaneously.

Note that if the clamp member is made of the non-magnetic material such as aluminum, as shown in FIG. 10, the sheet material of the mild steel is stuck thereto. However, though the volume in Table 1 is given including the volume of the sheet material, the thermal conductivity of the mild steel is on the order of 84 W/m·K, and the thermal conductivity of the clamp member as a whole becomes slightly small. However, since the material exhibiting the large temperature diffusion coefficient is used for the portion where the clamp member abuts on the optical disc, the desired effect can be acquired.

The best mode for carrying out the present invention and the examples have been discussed so far, however, the present invention is not limited to the best mode and the examples given above and can be modified in a variety of forms within the scope of the technical concept of the present invention. For instance, the optical disc accommodable in the disc cartridges in FIGS. 1 to 21 may be a reproduction-only (read-only) optical disc previously recorded with the information signals, a recordable (write-once) optical disc on which the information signals can be recorded once, or an (erasable) optical disc on which the information signals can be repeatedly recorded. Further, in particular, a preferable optical disc is an optical disc capable of high-density recording/reproducing by use of blue-violet laser beams having a wavelength that is on the order of 405 nm.

**Claims**

**1.** A disc cartridge comprising:

a shell unit for accommodating a disc-shaped recording medium rotatably and in a shielded state; and
a clamp member disposed in the vicinity of a central hole of said disc-shaped recording medium so that when the disc cartridge is loaded into a recording/reproducing apparatus and a clamp shaft of the apparatus is fitted into the central hole, said clamp member contacts with the clamp shaft and is thus clamped;

wherein said clamp member is made of a plate material exhibiting a larger temperature diffusivity than those of a substrate material of said disc-shaped recording medium and of a material of said clamp shaft, and a temperature diffusivity of said plate material is equal to or larger than $1 \times 10^{-4}$ $m^2/s$.

2. A disc cartridge according to claim 1, wherein a volume of said clamp member is within a range of $0.5$ $cm^3$ through $2$ $cm^3$, and a thermal capacity of said plate material is larger than a thermal capacity of an area, corresponding to said clamp member, of said substrate material.

3. A disc cartridge according to claim 1, wherein said plate material is any one of aluminum, an aluminum alloy, copper and a copper alloy.

4. A disc cartridge according to claim 1, wherein when said clamp member is made of a non-magnetic material, a magnetic material is added to part of said clamp member.

5. A disc cartridge comprising:

   a shell unit for accommodating a disc-shaped recording medium rotatably and in a shielded state; and
   a clamp member disposed in the vicinity of a central hole of said disc-shaped recording medium so that when the disc cartridge loaded into a recording/reproducing apparatus and a clamp shaft of the apparatus is fitted into the central hole, said clamp member contacts with the clamp shaft and is thus clamped;

   wherein a substance exhibiting a larger temperature diffusivity than that of said clamp member is added to said clamp member.

6. A disc cartridge according to claim 5, wherein said substance exhibiting the larger temperature diffusivity is disposed tightly in said clamp member by filling or coating with a substance having fluidity or semi-fluidity.

7. A disc cartridge according to claim 5, wherein when said clamp member is made of a non-magnetic material, a magnetic material is added to part of said clamp member.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21